# FASCICULE DE BREVET EUROPEEN

(11) **EP 2 689 042 B1**
(45) Date de publication et mention de la délivrance du brevet: **17.12.2014**
(21) Numéro de dépôt: 12717360.7
(22) Date de dépôt: 22.03.2012
(51) Int. Cl.: C21D 1/06, C21D 1/10, C21D 9/32, C23C 8/22, C23C 8/80, C21D 1/42, C23C 8/32

(54) **PROCEDE DE TRAITEMENT D'UNE PIECE TELLE QU'UN PIGNON**
VERFAHREN ZUR BEHANDLUNG EINER KOMPONENTE WIE ETWA EINES ZAHNRADES
METHOD FOR TREATING A COMPONENT SUCH AS A GEARWHEEL

(30) Priorité: 22.03.2011 FR 1152374
(43) Date de publication de la demande: 29.01.2014
(73) Titulaire: Hispano Suiza, 92707 Colombes Cedex (FR)
(72) Inventeur: ENGHELS, Florence, F-92400 Courbevoie (FR)
(74) Mandataire: Gevers France
(86) Numéro de dépôt international: PCT/FR2012/050602
(87) Numéro de publication internationale: WO 2012/127172

(56) Documents cités:
- EP-A1- 1 876 256
- EP-A1- 1 980 630
- JP-A- 8 311 607
- US-A1- 2003 205 297
- US-A1- 2009 266 449

## Description

### Domaine de l'invention

La présente invention concerne le domaine du traitement de pièces métalliques en acier afin de les rendre plus résistantes aux efforts auxquelles elles sont soumises pendant leur utilisation. Elle concerne notamment le traitement de pignons.

### Etat de la technique

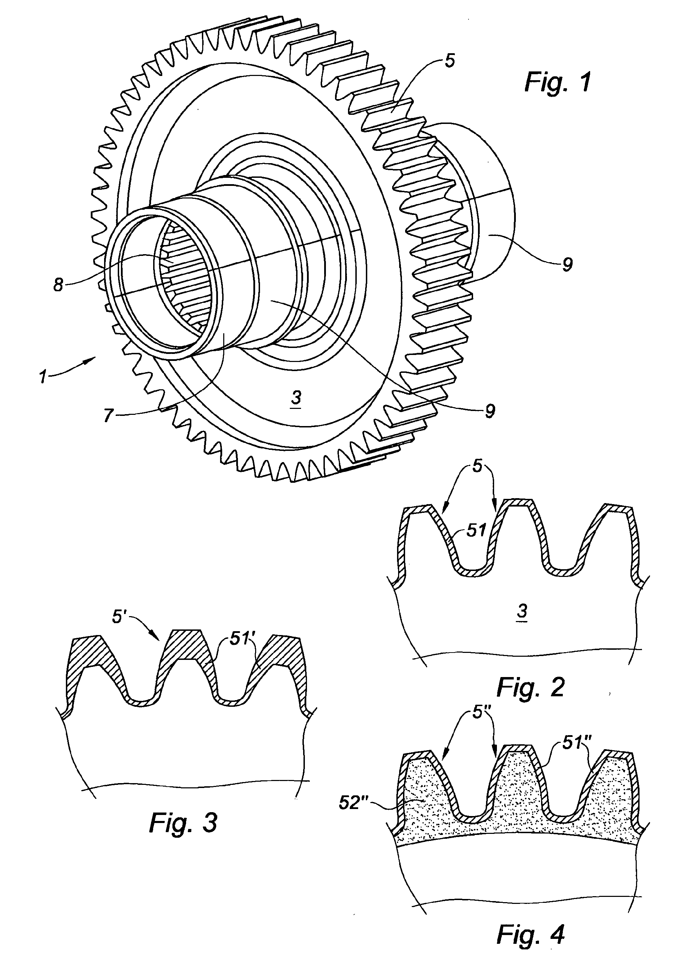

Un pignon dont un exemple de réalisation est représenté sur la figure 1 est une pièce mécanique de transmission d'efforts en rotation. Le pignon 1 représenté sur la figure comprend un voile 3 à la périphérie duquel une denture 5 est façonnée. Le voile 3 est prolongé axialement par des surfaces cylindriques 7 formant le fût et pouvant comporter des cannelures externes ou internes 8 et des portées de roulement 9 externes. Ces zones sont en contact avec d'autres pièces d'un ensemble mécanique : la denture 5 avec la denture d'un autre pignon, les portées de roulement avec des bagues intérieures de roulement et les cannelures avec des cannelures correspondantes d'un arbre de transmission par exemple. Les efforts sont ainsi transmis au travers de ces zones qui subissent ainsi les contraintes les plus importantes. Des traitements de durcissement sont généralement prévus pour renforcer leur résistance à l'usure.

Le traitement des zones ci-dessus est généralement un traitement de durcissement superficiel et vise à améliorer la dureté donc le glissement ainsi que la durée de vie de la pièce.

Le traitement des autres zones de la pièce est facultatif ou doit être évité le cas échéant quand il est nécessaire de conserver certaines zones de surface non durcies. C'est le cas des filetages, des zones minces, des zones destinées à la soudure ou encore les grands voiles de pignons sollicités en flexion. Il est aussi nécessaire de conserver une résilience appropriée du matériau constituant le coeur de la pièce.

Pour parvenir à ce résultat un moyen connu consiste à réaliser une ébauche en acier faiblement allié, avec un taux de carbone compris entre 0,10 et 0,20 %, procéder à un enrichissement superficiel en carbone de l'ébauche par cémentation sous atmosphère gazeuse appropriée à une température de 900°-935°C, puis à procéder à une trempe de toute la pièce par gaz , huile ou eau avec additifs.

On obtient ainsi une pièce trempée à coeur sur un matériau faiblement allié en carbone et étant en surface fortement enrichi en carbone. La pièce présente un gradient de dureté de la surface vers le coeur du matériau.

Cette technique présente l'avantage de pouvoir être adaptée à toute forme de pièce et d'être performante. Elle nécessite cependant un temps de traitement pouvant être long. Et la gamme de fabrication est généralement complexe dans la mesure où il faut prévoir la réalisation d'épargnes par cuivrage électrolytique -nécessitant des opérations de cuivrage et décuivrage- ou par « usinage dur » - nécessitant des usinages longs et couteux. , De plus ce procédé nécessitant une trempe de toute la pièce, une déformation de toute la pièce est à prévoir et des reprises en usinage sont à réaliser sur de nombreuses zones de la pièce. De même, il faut prévoir un usinage par rectification, sur les zones fonctionnelles durcies, comme les dentures ou les cannelures.

Un autre moyen connu est la trempe de contour par induction. Pour cela on emploie comme matériau de base un acier avec un taux de carbone plus élevé que dans la technique précédente, supérieur à 0,4%. Par exemple l'ébauche est réalisée en alliage référencé 60Cr4 dont le taux de carbone va de 0,56 à 0,64%. La réalisation de l'ébauche comprend l'usinage de la denture notamment. Puis on opère une trempe sélective par induction. Cette opération consiste à chauffer uniquement les zones à durcir par un moyen de chauffage par induction disposé le long du contour de la pièce et à procéder à une trempe. On obtient ainsi une pièce trempée en surface et non trempée à coeur, avec une trempe de contour. Comme la pièce ne subit aucun traitement de cémentation, le taux de carbone n'est pas changé par le traitement il reste le même à coeur et en surface.

Ce procédé est de mise en oeuvre rapide, ne nécessite pas d'épargne et l'usinage dur est limité à la finition ou la rectification des zones durcies. Par la trempe sélective, on n'induit pas de déformation des zones non durcies. Il présente cependant l'inconvénient de ne pas avoir toujours une bonne performance et d'être de mise au point difficile. D'une part il est nécessaire de mettre en oeuvre des générateurs haute fréquence qui sont onéreux et d'autre part il est nécessaire de créer un outillage spécifique par pièce et par zone à traiter d'où un coût d'investissement élevé.

Procédés de fabrication des pignons dentés, carburés et trempés sont divulgués dans EP 1980630 A1, EP 1876256 A1, JP-A-08311607 et US 2009/0266449 A1.

### Objet de l'invention

La présente invention a pour objet un procédé ne présentant pas les inconvénients des procédés de l'art antérieur.

L'invention a ainsi pour premier objet un procédé permettant d'obtenir un durcissement superficiel des zones de contact améliorant le glissement et la durée de vie.

L'invention a également pour objet un traitement de durcissement sur une profondeur de l'ordre du millimètre pour passer les charges de fonctionnement, notamment de la denture pour un pignon.

L'invention a également pour objet un procédé évitant de durcir à coeur la pièce pour conserver de la résilience.

L'invention a enfin pour objet la réalisation d'une pièce présentant des zones non durcies.

Conformément à l'invention selon la revendication 1, on parvient à ces objectifs avec un procédé de fabrication d'une pièce mécanique en acier avec durcissement de zones superficielles caractérisé par le fait qu'il comprend, à partir d'une ébauche de la pièce, les étapes successives de cémentation suivie d'un refroidissement sans trempe, de chauffage par induction desdites zones jusqu'à la température d'austénitisation de l'acier et de trempe.

Par l'enrichissement superficiel en carbone et la trempe sélective des zones à durcir, on combine à la fois la conservation des propriétés de surface des zones cémentées et la simplification de la gamme de traitement thermique. En, outre par la trempe sélective, on évite les déformations de la totalité de la pièce et on simplifie la gamme composée des étapes d'usinage. En effet, la gamme de l'invention n'impose pas « d'usinage dur », c'est-à-dire où la dureté est élevée après une cémentation et une trempe, des zones non fonctionnelles. Aucune épargne obligeant à des opérations de cuivrage d'une part avant traitement thermique puis à des opérations de décuivrage après les opérations de traitement thermique n'est nécessaire.

Conformément à une autre caractéristique, le matériau est un acier dont la teneur en carbone est d'au moins 0,3%.

L'acier utilisé, par le fait que le coeur n'est pas trempé, reste résilient tout en permettant par la cémentation son enrichissement jusqu'à un taux suffisant pour impartir la dureté recherchée. Ainsi, conformément à une autre caractéristique le taux de carbone superficiel est d'au moins 0,7%.

L'invention s'applique à la fabrication d'un pignon. Le chauffage par induction de l'ébauche est alors appliqué sur toute la profondeur de la denture. Un avantage de la trempe à induction « pleine dent » est qu'elle est facile à mettre en oeuvre car il n'est alors pas besoin d'appliquer le chauffage avec une précision particulière, au contraire d'une trempe de contour.

Le procédé permet ainsi de réaliser des pignons dont la dureté de surface est d'au moins 680HV, et la dureté à coeur est comprise entre 100 et 400 HB

### Brève description des figures.

On décrit maintenant plus en détail l'invention en référence aux dessins annexés sur lesquels :
La figure 1 est la représentation d'un pignon avec ses différentes zones à durcir ;
La figure 2 montre schématiquement en coupe la structure de la denture d'un pignon après cémentation et trempe de toute la pièce ;
La figure 3 montre schématiquement en coupe la structure de la denture d'un pignon après trempe dite de contour ;
La figure 4 montre schématiquement la structure de la denture après traitement de l'invention.

### Description de l'invention.

Conformément à l'invention, une barre d'acier est usinée, forgée ou transformée de façon appropriée pour obtenir une ébauche de la pièce à fabriquer. L'acier employé présente un taux de carbone peu élevé. Il est par exemple de l'ordre de 0,3%. Lorsqu'il s'agit d'un pignon la denture périphérique est usinée. Il en est de même des autres zones à durcir. Dans le cas d'un pignon tel que représenté sur la figure 1, la partie cylindrique formant le support de roulement et les cannelures pour la transmission des efforts d'entrainement en rotation entre un arbre et le pignon sont avantageusement usinées dans l'ébauche avant le traitement thermique ou thermochimique de durcissement qui suit.

Une fois l'ébauche préparée, celle-ci est soumise à un traitement de diffusion visant à augmenter, jusqu'à notamment environ 0,8%, le taux de carbone dans les couches superficielles sur une profondeur souhaitée. Il s'agit d'augmenter le taux de carbone dans les zones que l'on souhaite durcir. Le traitement peut être conventionnel, par exemple de cémentation dans un four sous pression partielle dans le cas de la technique connue de cémentation basse pression, CBP ou à pression atmosphérique dans le cas de la technique connue de cémentation gazeuse par un flux contrôlé d'un mélange gazeux réactif. Par exemple dans le cas de la CBP le processus de cémentation comprend les étapes suivantes de
- mise sous vide de la chambre,
- chauffage sous vide, par rayonnement ou autre moyen équivalent, progressif avec passage par des paliers d'uniformisation jusqu'à la température de cémentation,
- injection du mélange gazeux cémentant sous pression partielle dans le cas de la CBP et flux massiques contrôlés,
- succession de séquences de diffusion et de cémentation, selon la profondeur et le profil de souhaités.

L'invention n'est pas limitée à ce mode de traitement thermo chimique. Tout mode de traitement produisant ce résultat convient. Ainsi dans le cas d'une cémentation gazeuse le chauffage est classique.

La pièce est ensuite refroidie progressivement jusqu'à la température ambiante. Il est à noter que la vitesse de refroidissement est choisie en fonction de la dureté que l'on souhaite obtenir à coeur sur la pièce. De préférence, la vitesse de refroidissement est suffisamment éloignée de la vitesse de trempe pour obtenir un état non trempé à coeur.

L'étape suivante consiste à chauffer localement la pièce dans les zones souhaitées par induction magnétique jusqu'à la température d'austénitisation de l'acier, puis à procéder à une trempe.

La trempe par induction électromagnétique est un procédé connu en soi permettant d'obtenir un chauffage uniforme, rapide et sur une profondeur contrôlée et reproductible de 0,5 mm à plusieurs centimètres. La pièce en matériau ferromagnétique est placée à l'intérieur d'un solénoïde parcouru par un courant alternatif à haute, moyenne ou basse fréquence. Celui-ci avec la pièce se comporte comme un transformateur et développe un courant induit dans celle-ci. L'effet de chauffe à la périphérie de la pièce est très rapide.

Une trempe de contour par induction met en oeuvre des courants à haute fréquence, dont les fréquences associées sont comprises entre 20 et 600KHz, et nécessite un générateur dont la puissance est supérieure à 100KW.

Une trempe superficielle par induction moyenne fréquence met en oeuvre un générateur de courant à moyenne fréquence dont la puissance est de l'ordre de 50KW et dont les fréquences de courant associées sont de l'ordre de 10KHz.

Une trempe superficielle par induction basse fréquence met en oeuvre un générateur de courant à basse fréquence dont la puissance est inférieure à 1KW et dont les fréquences de courant associées sont inférieures à 1KHz. Le choix du générateur est fonction généralement de la profondeur de traitement choisi.

Après chauffage la pièce est baignée dans un fluide de trempe, généralement de l'eau incorporant un ou plusieurs additifs appropriés.

On se distingue, dans le cadre de l'invention, de la technique de trempe par induction électromagnétique dite de contour.

On rappelle que le chauffage de contour d'un pignon consiste à disposer celui-ci dans le champ magnétique alternatif d'un inducteur mono-ou multi-spire entourant de manière coaxiale sa périphérie dentée de façon à créer un champ axial. Le champ alternatif alimentant l'inducteur pour une trempe de contour sur denture est généralement à haute fréquence, allant de 20 à 600kHz, avec un générateur de courant dont la puissance est supérieure à 100kW.

C'est la trempe basse ou moyenne fréquence qui est proposé dans l'invention, car on propose de réaliser un trempe superficielle mais ne suivant pas exactement le contour de la dent. »

Ainsi, conformément à l'invention, on procède à un chauffage par induction dit « pleine dent » où on réalise une trempe superficielle ne suivant pas le contour exact de la denture. On procède à un chauffage moins précis qui peut être effectué par un générateur de courant à basse ou moyenne fréquence. Le chauffage est plus facile à mettre au point, car il n'est pas nécessaire que les courants suivent le contour de la dent.

Après chauffage la pièce est soumise à une trempe, par exemple à une trempe à l'eau.

On a représenté sur les figures 2, 3 et 4 les effets des différents modes de traitement, les deux premiers correspondants à l'art antérieur et le troisième à l'invention.

La denture 5 de la figure 2 présente un état cémenté dans la couche superficielle 51. La pièce 3 est trempée à coeur. On utilise un acier allié à taux de carbone faible, 0,15%. Par la cémentation le taux de carbone dans la couche superficielle atteint 0,8%.

La denture 5' de la figure 3 présente une couche superficielle 51' dont le durcissement est obtenu par la trempe de contour par induction. Cette couche superficielle peut être relativement épaisse. Pour conserver une certaine ténacité à coeur, l'acier présente un taux de carbone plus élevé que précédemment 0,6%. Le taux est le même dans toute la pièce.

La denture 5" de la figure 4 présente une couche superficielle 51" cémentée dont le taux de carbone superficiel est important 0,8%. En raison de la trempe par induction appliquée sur toute la denture, toute cette partie 52" formée par l'ensemble des dentes de l'extrémité jusqu'à la racine et le fond de la denture entre deux dents adjacentes, présente une dureté supérieure à celle de la partie du disque sous jacente. Le matériau n'est pas trempé à coeur.

## Revendications

1. Procédé de fabrication d'un pignon denté en acier avec une phase de durcissement de zones superficielles, **caractérisé par le fait qu'**il comprend la réalisation d'une ébauche de la pièce avec des zones à durcir, puis les étapes successives
de cémentation cette étape de cémentation étant suivie d'un refroidissement sans trempe,
de chauffage localisé par induction par au moins un générateur de courant à moyenne ou basse fréquence, appliqué sur toute la profondeur de la denture du pignon, jusqu'à la température d'austénitisation de l'acier et
de trempe.

2. Procédé selon la revendication précédente, selon lequel le matériau est un acier dont la teneur en carbone est d'au moins 0,3%.

3. Procédé selon l'une des revendications précédentes, selon lequel la pièce est cémentée de manière à ce que le taux de carbone en surface soit d'au moins 0,8%.

4. Pignon obtenu selon le procédé de l'une des revendications précédentes dont la dureté en surface des pignons cémentés, chauffés par induction pleine dent et trempés est d'au moins 680 HV.

5. Pignon selon la revendication précédente dont la dureté des zones (52") trempées mais non cémentées est d'au moins 450 HB.

6. Pignon selon la revendication précédente dont la dureté du matériau de base non trempé est de dureté comprise entre 100 et 400 HB.

## Patentansprüche

1. Verfahren zur Herstellung eines Zahnritzels aus Stahl mit einer Phase der Aushärtung von Oberflächenzonen, **dadurch gekennzeichnet, dass** es die Herstellung eines Rohlings des Teils mit auszuhärtenden Zonen und dann die folgenden Schritte hintereinander umfasst:
einen Zementierungsschritt, wobei auf diesen Zementierungsschritt eine Abkühlung ohne Härten folgt,
einen lokalisierten Induktionsheizschritt durch mindestens einen Stromgenerator mittlerer oder niedriger Frequenz, der auf der gesamten Tiefe der Zahnung des Ritzels bis zur Austenitisierungstemperatur angewandt wird, und
einen Härtungsschritt.

2. Verfahren nach dem vorhergehenden Anspruch, bei dem das Material ein Stahl ist, dessen Kohlenstoffgehalt mindestens 0,3 % beträgt.

3. Verfahren nach einem der vorhergehenden Ansprüche, bei dem der Teil derart zementiert wird, dass die Kohlenstoffrate an der Oberfläche mindestens 0,8 % beträgt.

4. Ritzel, das nach dem Verfahren nach einem der vorhergehenden Ansprüche hergestellt wird, wobei die Oberflächenhärte der zementierten, durch Induktion vollzahnig erhitzten und gehärteten Ritzel mindestens 680 HV beträgt.

5. Ritzel nach dem vorhergehenden Anspruch, dessen Härte der gehärteten, aber nicht zementierten Zonen (52") mindestens 450 HB beträgt.

6. Ritzel nach dem vorhergehenden Anspruch, dessen Härte des nicht gehärteten Basismaterials zwischen 100 und 400 HB beträgt.

## Claims

1. A method of manufacturing a steel toothed gearwheel with a phase of hardening surface zones, **characterized in that** it involves creating a blank of the component with zones that are to be hardened, and then the following steps
Carburizing, this carburizing step being followed by a cooling without quenching,
localized induction heating using at least one medium-frequency or low-frequency current generator, which is applied to the entire depth of the gearwheel tooth set, up to the austenitizing temperature of the steel, and quenching.

2. The method as claimed in the preceding claim, whereby the material is a steel with a carbon content of at least 0.3%.

3. The method as claimed in one of the preceding claims, whereby the component is carburized in such a way that the surface carbon content is at least 0.8%.

4. A gearwheel obtained according to the method of one of the preceding claims, the surface hardness of the gearwheels being at least 680 HV.

5. The gearwheel as claimed in the preceding claim, of which the hardness of the quenched but not carburized zones (52'') is at least 450 HB.

6. The gearwheel as claimed in the preceding claim, of which the hardness of the non-quenched base material is a hardness of between 100 and 400 HB.
